# EUROPEAN PATENT APPLICATION

(11) **EP 2 422 909 A1**
(43) Date of publication of application: **29.02.2012**
(21) Application number: 10766937.6
(22) Date of filing: 30.03.2010
(51) Int. Cl.: B23D 47/00, B23D 45/06

(54) **STRUCTURE FOR PREVENTING FALLING OFF OF RIVING KNIFE FASTENER FOR ROTARY SAW**

(30) Priority: 21.04.2009 JP 2009102801
(71) Applicant: Makita Corporation, Anjo-shi, Aichi 446-8502 (JP)
(72) Inventor: TANAKA, Koji, Anjo-shi Aichi 446-8502 (JP); KANI, Toshiyuki, Anjo-shi Aichi 446-8502 (JP)
(74) Representative: Kramer - Barske - Schmidtchen
(86) International application number: PCT/JP2010/055666
(87) International publication number: WO 2010/122878

(57) **Abstract**

In a table saw having a splitter extending along the saw blade in order to prevent so-called kickback of a workpiece to be cut, which is caused by the rotating saw blade, in the case that a fixing screw of the splitter is loosened for positional adjustment, there has been a problem that if the fixing screw is excessively loosened, the fixing screw is removed to result deterioration in workability. The present invention prevents the fixing screw from being accidentally excessively loosened.

A removal preventing member, such as a nut (14) with a loosening preventing function, is attached to the front end of a fixing screw (13), whereby the user may not accentually excessively loosen the fixing screw, thereby preventing the screw from being removed from a threaded hole (11c).

## Description

### TECHNICAL FIELD

This invention relates to a structure for preventing a fixing tool, which is used for fixing a splitter for preventing so-called kickback to a splitter mounting base, from being removed from the mounting base when loosened, for example, in a cutting machine called a table saw

### BACKGROUND ART

A stationary cutting machine generally referred to as a table saw has a table on which a workpiece to be cut is placed, and a cutting machine main body is supported on the lower surface side of the table, with an upper portion of a circular saw blade protruding on the upper surface side of the table; the workpiece on the table is moved in a surface direction, so that the rotating saw blade relatively cuts into the workpiece, thereby performing a cutting operation.
Normally, in a cutting machine of this type, the saw blade, protruding on the upper surface side of the table, rotates such that, on the near side as seen from the user, the blade edge dives in downwards from the upper surface of the table, and that, on the front side with respect to the direction in which the cutting proceeds (i.e., on the side opposite the side near the user), the blade edge is rotated so as to be displaced upwardly from the upper surface of the table. Thus, the blade edge on the front side with respect to the cutting proceeding direction of the saw blade comes into contact with the cut portion immediately after cut, with the result that there is generated, in some cases, a phenomenon called kickback; there have been devised various contrivances to help to prevent generation of this kickback.
Conventionally, as a countermeasure against this kickback, there has been employed a splitter. The splitter is a flat plate of substantially the same thickness as the saw blade, and is arranged on the front side with respect to the cutting proceeding direction of the saw blade so as to be flush with the saw blade. Due to this splitter, a gap of a size substantially corresponding to the thickness of the saw blade is secured at the cut portion immediately after cut, whereby the cut portion is prevented from coming into contact with the saw blade, thereby preventing kickback.
A conventional technique regarding a mounting structure for this splitter is disclosed in patent documents mentioned below. The splitter is supported by a splitter mounting section of the cutting machine main body. The splitter is supported so as to extend upwards from the splitter mounting section, and the upper portion thereof protrudes upwards from the table upper surface, with the protruding portion being arranged to extend along the blade edge on the front side with respect to the cutting proceeding direction of the saw blade.
A splitter mounting section disclosed in Patent Document 1 is configured such that a fixing screw is fastened to the mounting base provided on the cutting machine main body side, whereby the splitter is supported in an upright state. Normally, in order to adjust the gap between this splitter and the saw blade, the splitter is configured such it can be adjusted in position by loosening the fixing screw of the splitter mounting section, or can be removed from the mounting base.

### PRIOR ART DOCUMENTS

### PATENT DOCUMENTS

Patent Document 1: Japanese Laid-Open Patent Publication No. 2005-262520
Patent Document 2: Japanese Laid-Open Patent Publication No. 2005-262337

### SUMMARY OF THE INVENTION

### PROBLEM TO BE SOLVED BY THE INVENTION

In the prior art, when, in the splitter mounting section, the fixing screw is loosened in order to perform positional adjustment of the splitter, etc., it can happen that the fixing screw is loosened excessively, resulting in the fixing screw being removed from the mounting base. If the fixing screw is removed from the mounting base, a lot of time is required in performing the operation of adjusting the position of the splitter, the operation of fixing the same, etc., resulting in deterioration in workability.
On the other hand, in the splitter mounting structure disclosed in Patent Document 2, the positional adjustment of the splitter is performed not by a fixing screw but by the operation of pushing a lock pin, so that the problem as mentioned above is not involved; this lock pin system, however, has a problem in that the construction of the splitter mounting section is rather complicated.
In view of this, the present invention is aimed to prevent the fixing tool from being inadvertently removed from the mounting base when loosening the fixing tool in order to perform the positional adjustment of the splitter, etc., thereby achieving an improvement in terms of workability in the operation of positional adjustment of the splitter, etc.

For this purpose, the present invention provides removal prevention structures configured as defined in the claims.
According to the removal prevention structure defined in claim 1, when loosening the fixing member in order to perform splitter position adjustment, etc., it is possible to prevent the fixing member from being completely removed from the mounting base by virtue of a removal preventing member even if it is accidentally excessively loosened, so that hindrance of the subsequent operations as in the case of occurrence of removal may not be caused, thus making it possible to achieve an improvement in terms of workability.
As the fixing tool, it is possible to employ, for example, a screw (bolt) and a nut. A screw is fastened to a threaded hole of the mounting base, or a nut is fastened to a threaded shaft portion (stud bolt) fixed to the mounting base, whereby the splitter is fixed to the mounting base in an uprise state. Removal of the fixing tool from the mounting base means complete removal of the fixing screw from the threaded hole, or complete removal of the nut from the threaded shaft portion. Thus, even in a case where the fixing tool is anchored to the mounting base side by a string or a wire, if the fixing tool is removed from the threaded hole or the threaded shaft portion, the fixing tool is regarded as having removed from the mounting base.
According to the removal prevention structure of claim 2, there is used as the fixing tool a fixing screw that can be fastened and loosened with respect to the threaded hole of the mounting base mainly through rotation, whereby it is possible to provide an inexpensive and reliable mounting structure.
According to the removal prevention structure of claim 3, the mounting base is provided with a threaded hole extending therethrough; and in the case that when fastening is effected at one end of this threaded hole, a front end portion of the threaded shaft portion protrudes from the other end thereof, mounting a nut with a loosening preventing function to the front end portion as a removal preventing member can prevent removal of the fixing screw from the threaded hole. As the nut with a loosening preventing function, there may be used, for example, a so-called double nut, which is completely fixed to the threaded shaft portion; other than this, it is also possible to use a single nut (a so-called nylon nut) having an elastic biting portion imparting a rotational resistance to the threaded shaft portion.
According to the removal prevention structure of claim 4, when the threaded shaft portion is rotated to be loosened with respect to the threaded hole, the fixing screw rotates idle with respect to the threaded hole via an unthreaded portion, whereby removal of the fixing screw from the threaded hole is prevented.

### BRIEF DESCRIPTION OF THE DRAWINGS

[Fig. 1] A side view of an entire cutting machine having a splitter removal prevention structure according to an embodiment of the present invention.
[Fig. 2] A vertical sectional view of a splitter mounting section according to a first embodiment. This figure shows a state in which fixing tools have been fastened.
[Fig. 3] A vertical sectional view of the splitter mounting section according to the first embodiment. This figure shows a state in which the fixing tools have been loosened.
[Fig. 4] A vertical sectional view of a splitter mounting section according to a second embodiment. This figure shows a state in which fixing tools have been fastened.
[Fig. 5] A vertical sectional view of the splitter mounting section according to the second embodiment. This figure shows a state in which the fixing tools have been loosened.
[Fig. 6] A vertical sectional view of a splitter mounting section according to a third embodiment. This figure shows a state in which fixing tools have been fastened.
[Fig. 7] A vertical sectional view of the splitter mounting section according to the third embodiment. The drawing shows a state in which the fixing tools have been loosened.

### MODE FOR CARRYING OUT THE INVENTION

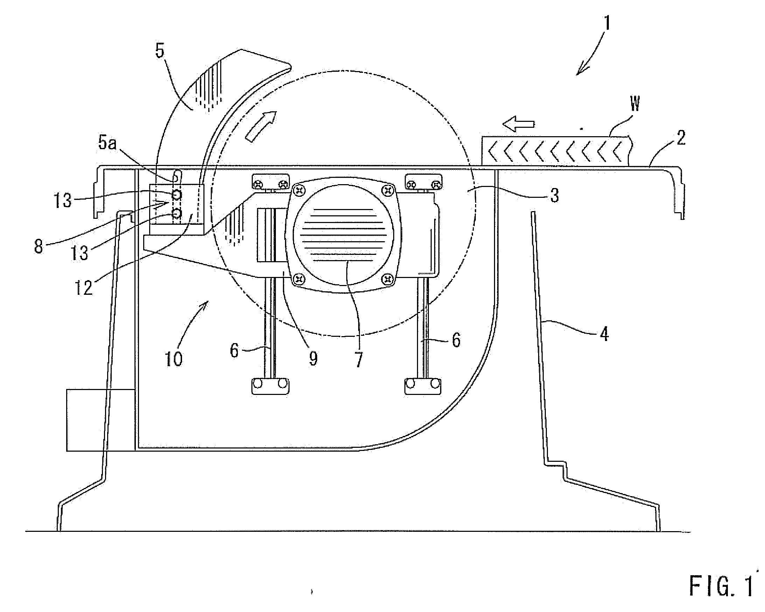

Next, embodiments of the present invention will be described with reference to Figs. 1 through 7. In the embodiments, a so-called table saw is exemplified as an example of a cutting machine. Fig. 1 is a general view of a cutting machine 1 according to the embodiments. The embodiments are characterized by a structure for preventing fixing tools 13, which fix a splitter 5 to a splitter mounting section 8, from being removed from the splitter mounting section 8; apart from this, regarding the basic construction of the table saw, a conventionally adopted one suffices, and no particular modification is required in the embodiments. Thus, the overall construction of the cutting machine 1 will be briefly described.
This cutting machine 1 has a table 2, on which workpiece W to be cut is placed, and a cutting machine main body 10 supported under the table 2. The table 2 is supported horizontally by a base 4. The user is positioned on the right side of the table 2 as seen in the drawing.
The cutting machine main body 10 has an ascent/descent base 9 supported so as to be capable of vertical parallel ascent/descent movement via slide shafts 6 provided on the base 4 along the vertical direction, an electric motor 7 mounted to the ascent/descent base 9, and a saw blade 3 rotating by the electric motor 7 as the drive source. The upper portion of the saw blade 3 protrudes upwards from substantially the center of the table 2. Through ascent/descent movement of the ascent/descent base 9, it is possible to change the dimension by which the saw blade 3 protrudes from the upper surface of the table 2 (the cut-in depth with respect to the workpiece W). As indicated by an outline arrow in Fig. 1, the saw blade 3 rotates clockwise. Thus, the blade edge on the front side in the cutting proceeding direction of the portion of the saw blade 3 protruding on the upper surface side of the table 2 is displaced upwardly.
The workpiece W is moved in the direction as indicated by the outline arrow (the cutting proceeding direction) with respect to the saw blade 3 protruding from the upper surface of the table 2, whereby the front side blade edge of the saw blade 3 is relatively cut into the workpiece W, whereby the workpiece W is cut. A so-called splitter 5 (riving knife) is arranged so as to extend along the blade edge on the front side in the cutting proceeding direction (the left side in Fig. 1) of the saw blade 3.

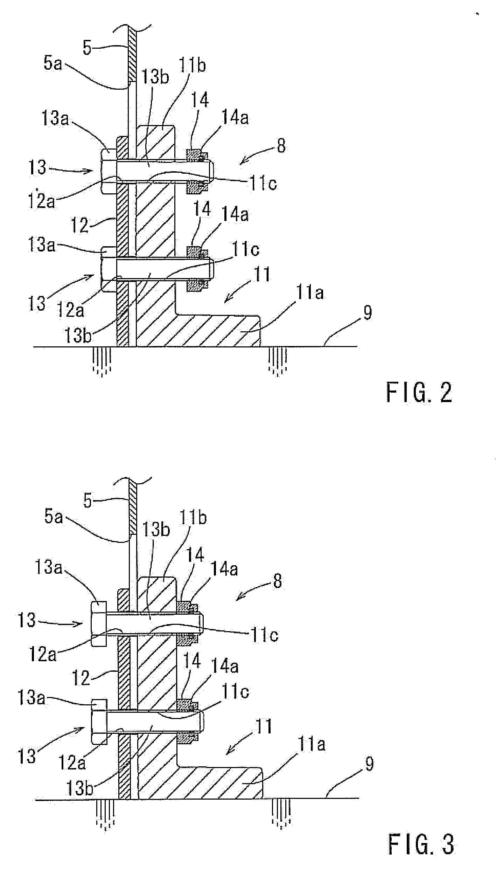

The splitter 5 is a flat plate of substantially the same thickness as the saw blade 3, and is supported so as to be flush with the saw blade 3. The splitter 5 is held in the kerf of the workpiece W immediately after cut so as to maintain a fixed width of the kerf, whereby the kerf is prevented from coming into contact with the saw blade 3 to thereby prevent kickback (a phenomenon in which the kerf of the workpiece W is raised upwards).
The splitter 5 is mounted to the splitter mounting section 8 provided on a lateral side of the ascent/descent base 9. Like the saw blade 3, the splitter 5 protrudes from the lower surface side to the upper surface side of the table 2. The splitter mounting section 8 is illustrated in detail in Fig. 2 and its subsequent figures.
The splitter mounting section 8 has a splitter mounting base 11 mounted on the ascent/descent base 9, a pressure plate 12, and two fixing tools 13. The splitter mounting base 11 is an L-shaped member having a horizontal base portion 11a and a vertical base portion 11b; the horizontal base portion 11a is fixed to the ascent/descent base 9, and the vertical base portion 11b is fixed in position in a state of being raised upward. The lower portion of the splitter 5 is held between the vertical base portion 11b and the pressure plate 12.
As the fixing tools 13, there are used hexagonal bolts each having a hexagonal head portion 13a and a threaded shaft portion 13b. In correspondence with the two fixing tools 13, there are provided two insertion holes 12a in the pressure plate 12, and two threaded holes 11c are provided in the vertical base portion 11b of the splitter mounting base 11. The two threaded holes 11c are formed so as to extend through the vertical base portion 11b in the thickness direction.
Further, in the lower portion of the splitter 5, there is provided a mounting hole 5a in the form of an elongated groove hole. The mounting hole 5a is open at the lower end of the splitter 5. The two fixing tools 13 are passed through the mounting hole 5a.
The threaded shaft portions 13b of the fixing tools 13 are passed through the insertion holes 12a of the pressure plate 12 and the mounting hole 5a of the splitter 5, and are fastened to the threaded holes 11c of the vertical base portion 11b, whereby the lower portion of the splitter 5 is firmly held between the vertical base portion 11b and the pressure plate 13, so that the splitter 5 is supported in an uprise state.
Conversely, when the two fixing tools 13 are loosened through rotation in the loosening direction, the holding by the pressure plate 12 is loosened, so that it is possible to adjust the vertical position of the splitter 5; further, it is possible to remove the splitter 5 from the splitter mounting section 8 by pulling it upwards from between the pressure plate 12 and the vertical base portion 11b.

The threaded shaft portions 13b of the fixing tools 13 are long enough to extend through the threaded holes 11c of the vertical base portion 11b to protrude therefrom. Attached to the protruding ends of the threaded shaft portions 13b are nuts 14 with a loosening preventing function as removal preventing members. Elastic biting members 14a are mounted to the inner peripheral sides (female screw portions) of the nuts 14. Due to their biting action owing to their elasticity, the biting members 14a exert a loosening preventing function on the threaded shaft portions 13b. Thus, as shown in Fig. 3, when the two fixing tools 13 are loosened, the nuts 14 come into contact with the side surface of the vertical base portion 11b, whereby the rotation in the loosening direction of the fixing tools 13 is restricted. In this way, because the rotating operation amount in the loosening direction of the two fixing tools 13 is restricted, removal of the fixing tools from the threaded holes 11c of the vertical base portion 11b is prevented, and therefore, the fixing tools may not be removed from the threaded holes 11c by being excessively loosened.
According to the fixing tool removal prevention structure of the first embodiment constructed as described above, the nuts 14 with a loosening preventing function are attached to the fixing tools 13 to restrict the rotating operation amount in the loosening direction, whereby removal of the fixing tools from the threaded holes 11c is prevented. Thus, for example, in the case that the two fixing tools 13 are loosened in order to perform position adjustment of the splitter 5, etc., the fixing tools may not be accidentally excessively loosened, so that the fixing tools 13 may not be removed from the threaded holes 11c, whereby it is possible, for example, to quickly perform the subsequent fastening operation, thus enabling an improvement in terms of the workability in the position adjusting operation.

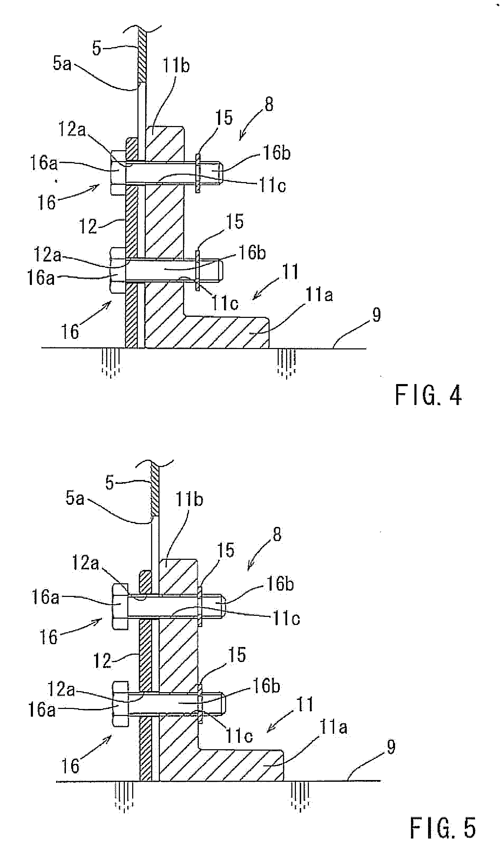

The removal prevention structure according to the first embodiment described above may be modified in various ways. For example, instead of the nuts 14, it is possible to adopt removal preventing means of some other form. Figs. 4 and 5 show a removal prevention structure according to a second embodiment. Fixing tools 16 according to the second embodiment differ from those of the first embodiment in that stop rings 15 are attached thereto instead of the nuts 14 of the first embodiment. The other respects of this embodiment may be the same as the first embodiment, so the description will be omitted by using the same reference numerals.
The fixing tool removal prevention structure according to the second embodiment also employs two fixing tools 16 each employing a hexagon bolt having a hexagonal head portion 16a and a threaded shaft portion 16b. The stop rings 15 serving as the removal preventing members are attached to the end portions of the threaded shaft portions 16b protruding from the threaded holes 11c. The stop rings 15 are attached to the threaded shaft portions 16b so as not to be displaced in the axial direction.
Also with the fixing tools 16 with the snap rings 15 attached thereto, when they are fastened as shown in Fig. 4, they firmly hold the lower portion of the splitter 5 between the pressure plate 12 and the vertical base portion 11b, making it possible to support the splitter 5 in an uprise state. Conversely, when the two fixing tools 16 are loosened as shown in Fig. 5, the holding by the pressure plate 12 is released, making it possible to adjust the position of the splitter 5. The rotating operation amounts in the loosening direction of the two fixing tools 16 are restricted by the respective stop rings 15. As a result, the user may not rotate the fixing tools accidentally excessively in the loosening direction, so that removal of the two fixing tools 16 from the threaded holes 11c is reliably prevented, thereby securing the workability in the position adjusting operation of the splitter 5, etc.

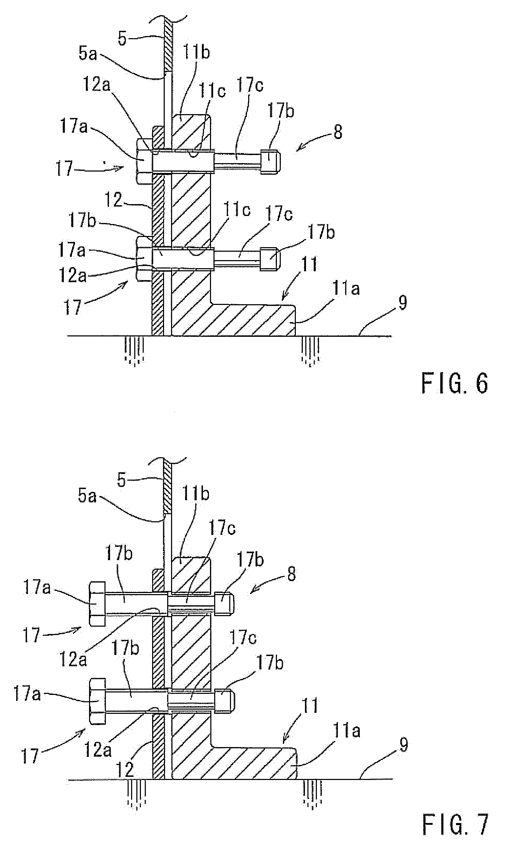

Figs. 6 and 7 show a fixing tool removal prevention structure according to a third embodiment. Fixing tools 17 according to the third embodiment differ from those of the first and second embodiments in that they have unthreaded portions 17c instead of the nuts 14 and the stop rings 15. The other respects of this embodiment may be the same as the first and second embodiments, so the description will be omitted by using the same reference numerals.
The fixing tool removal prevention structure according to the third embodiment also employs two fixing tools 17. As the two fixing tools 17, hexagon bolts each having a hexagonal head portion 17a and a threaded shaft portion 17b are employed. The threaded shaft portions 17b are provided with unthreaded portions 17c devoid of threads. In the third embodiment, the unthreaded portions 17c function as the removal preventing members. The unthreaded portion 17c is provided in a predetermined axial range in a midway of the threaded shaft portion 17b. Thus, a thread is left at the end portion within the range protruding from the threaded hole 11c, with the threaded shaft portions 17b being situated on both sides of the unthreaded portion 17c. As shown in Fig. 6, the unthreaded portions 17c are provided so as to protrude from the threaded holes 11c in a state in which the fixing tools 17 have been firmly fastened.
Further, the unthreaded portions 17c are provided in a length range larger than the thickness of the vertical base portion 11b of the splitter mounting base 11.
According to the removal prevention structure having the fixing tools 17 constructed as described above, when the two fixing tools 17 are firmly fastened to the threaded holes 11c as shown in Fig. 6, the lower portion of the splitter 5 is firmly held between the pressure plate 12 and the vertical base portion 11b, and the splitter 5 is supported so as to be raised upward. Conversely, as shown in Fig. 7, when the two fixing tools 17 are rotated in the loosening direction, the holding by the pressure plate 12 is released, so that it is possible to perform position adjustment of the splitter 5, etc. The unthreaded portions 17c are respectively provided on the threaded shaft portions 17b of the two fixing tools 17. Therefore, when the fixing tools 17 are rotated in the loosening direction, the unthreaded portions 17c are situated on the inner peripheral sides of the threaded holes 11c, so that the threaded shaft portion 17b are brought not to engage. In this state, the fixing tools 17 rotate idle with respect to the threaded holes 11c, whereby removal of the fixing tools 17 from the threaded holes 11c is prevented.

The embodiments described above may be further modified in various ways. For example, while in the above-described examples the splitter 5 is fixed in position by using two fixing tools 13 (16, 17), it is also applicable to the case where the fixing is effected by using one or three or more fixing tools.
Further, while the constructions using hexagon bolts as the fixing tools 13, 16, 17 have been exemplified, it is also possible to use screws of some other forms. Further, as the fixing tools, it is also possible to use, fixing means, such as nuts, other than screws, which allow fastening and loosening through rotation. Although not shown, in the case where the nuts are fastened to and loosened from the threaded shaft portions through rotation, it is possible to prevent removal of the nuts from the threaded shaft portions due to excessive loosening of the nuts by fixedly providing threaded shaft portions (so-called stud bolts) on the splitter mounting base side, and providing such threaded shaft portions with removal preventing means corresponding to the loosening preventing nuts 14, the stop rings 15, or the unthreaded portions 17c. In the case where nuts are used as the fixing tools, it is possible to omit the threaded holes 11c of the vertical base portion 11b.
Further, in the first embodiment, instead of the nuts 14 with a loosening preventing function, two nuts with no special loosening preventing function may be mutually fastened, thus making it possible to achieve the same operation and advantages by so-called double nuts with a loosening preventing function.

## Claims

1. A removal prevention structure for a cutting machine having a table on which a workpiece to be cut is placed, and a cutting machine main body supported under the table,
wherein the cutting machine main body has a circular saw blade rotated by an electric motor, and a splitter for preventing kickback caused by the saw blade, with an upper portion of the saw blade and an upper portion of the splitter being supported while protruding from an upper surface of the table,
wherein the splitter is supported by a splitter mounting section provided on the cutting machine main body, the splitter mounting section can fix the splitter in an uprise state by by fastening a fixing tool to a splitter mounting base, and the fixing tool can be loosened to allow positional adjustment of the splitter, and
wherein the fixing tool can be fastened and loosened through rotation and has a removal preventing member for preventing removal from the splitter mounting base when loosened.

2. The removal prevention structure according to claim 1, wherein a fixing screw having a threaded shaft portion is used as the fixing tool.

3. The removal prevention structure according to claim 2, wherein the fixing screw has the threaded shaft portion longer than a threaded hole formed in the mounting base to extend therethrough, and wherein a nut with a loosening preventing function is attached to an end portion of the threaded shaft portion protruding from the threaded hole to thereby configure the removal preventing member.

4. The removal prevention structure according to claim 2, wherein the fixing screw has a threaded shaft portion longer than a threaded hole formed in the mounting base to extend therethrough, and wherein an unthreaded portion devoid of threads is provided in a midway of the threaded shaft portion over a range longer than the threaded hole to thereby provide the removal preventing member.
